# EUROPEAN PATENT APPLICATION

(11) **EP 3 499 195 A1**
(43) Date of publication of application: **19.06.2019**
(21) Application number: 17839203.1
(22) Date of filing: 24.07.2017
(51) Int. Cl.: G01F 3/22

(54) **FLOW RATE MEASURING DEVICE**

(30) Priority: 10.08.2016 JP 2016157161
(71) Applicant: Panasonic Intellectual Property Management Co., Ltd., Osaka-shi, Osaka 540-6207 (JP)
(72) Inventor: YOKOHATA Mitsuo, Osaka 540-6207 (JP); KITANO Yusuke, Osaka 540-6207 (JP)
(74) Representative: SSM Sandmair
(86) International application number: PCT/JP2017/026624
(87) International publication number: WO 2018/030130

(57) **Abstract**

The flow rate measuring device includes flow rate measurer (104) that measures a flow rate of gas, appliance discriminator (116) that discriminates a gas appliance (13 to 15) that is being used based on a change in flow rate from a reference flow rate obtained based on the flow rate measured by flow rate measurer (104), and reference flow rate setter (110) that updates a reference flow rate based on the flow rate measured by flow rate measurer (104) when the flow rate measured by the flow rate measurer satisfies a predetermined condition. Furthermore, the predetermined condition is changed when appliance discriminator (116) determines that the gas appliance is a specific gas appliance.

## Description

### TECHNICAL FIELD

The present invention relates to a technique for discriminating a gas appliance which starts to be used by detecting a change in a flow rate of gas.

### BACKGROUND ART

A gas meter device has been proposed which identifies which gas appliance starts to be used based on a flow rate change in gas flowing in a pipe (see, for example, PTL 1). PTL 1 below discloses a gas meter device which discriminates a gas appliance which starts to be used by measuring a gas flow rate at a prescribed time interval and comparing a flow rate change pattern thus obtained with a flow rate change pattern found in advance for each gas appliance. PTL 1 proposes to improve discriminating accuracy by using a flow rate indicating a characteristic of a gas appliance for discrimination of the gas appliance.

PTL 1 illustrates an intermediate stable flow rate as one of flow rates indicating a characteristic of a gas appliance. The intermediate stable flow rate is a flow rate that corresponds to a region where a rate of increase in flow rate is relatively small and which appears after rising of a flow rate immediately after start of use of a gas appliance until the flow rate stabilizes to an almost constant value in a change pattern of a flow rate acquired at a prescribed time interval. In other words, the intermediate stable flow rate is a flow rate corresponding to a flat portion in the course of the flow rate increase in the pattern of the flow rate change. For example, a gas appliance which performs a slow ignition operation, such as a gas fan heater, typically exhibits such a pattern of a flow rate change. The slow ignition operation is an ignition operation performed in a state where gas pressure is suppressed in order to prevent explosive ignition.

It is necessary to discriminate a gas appliance which starts to be used not only in a state where a flow rate of gas is zero, but also in a state where another gas appliance is operating. In order to detect a pattern of a flow rate change of the gas appliance, it is therefore necessary to find the change in flow rate while using a flow rate in a state where the flow rate is stable as an offset flow rate (hereinafter referred to as a reference flow rate). A method for finding the reference flow rate is also disclosed.

Specifically, when a difference value between gas flow rates obtained at constant time intervals is within a predetermined range consecutively a predetermined number of times, a reference flow rate is calculated and saved again.

### Citation List

### Patent Literature

PTL 1: Unexamined Japanese Patent Publication No. 2011-095200

### SUMMARY OF THE INVENTION

However, in some gas powered water heaters or the like, a gas flow rate temporarily becomes stable after start of use, and then a change in gas flow rate similar to a gas fan heater occurs. When such a gas appliance is present, a conventional gas meter device determines that use of a gas powered water heater has started based on a change in gas flow rate at start of use, and then updates a reference flow rate to a flow rate that has temporarily become stable. As a result, it is erroneously determined that use of a gas fan heater has started based on a subsequent change in gas flow rate similar to a gas fan heater.

The present invention provides a flow rate measuring device that can prevent erroneous discrimination of a gas appliance by changing a reference flow rate update condition that is a predetermined condition when use of a specific gas appliance such as gas powered water heater is detected and thus preventing erroneous update of a reference flow rate.

A flow rate measuring device according to the present invention includes a flow rate measurer that measures a flow rate of gas; an appliance discriminator that discriminates a gas appliance that is being used based on a change in flow rate found by comparing the flow rate measured by the flow rate measurer and a reference flow rate; and a reference flow rate setter that updates the reference flow rate based on the flow rate measured by the flow rate measurer when the flow rate measured by the flow rate measurer satisfies a predetermined condition. Furthermore, the reference flow rate setter changes the predetermined condition when the appliance discriminator determines that the gas appliance is a specific gas appliance.

According to the configuration, by changing a reference flow rate update condition that is a predetermined condition when use of a specific gas appliance such as a gas powered water heater is detected, it is possible to prevent erroneous update of a reference flow rate and thus prevent erroneous determination of a gas appliance.

### BRIEF DESCRIPTION OF DRAWINGS

FIG. 1 is a block diagram illustrating a configuration of a gas meter that is a flow rate measuring device according to an exemplary embodiment of the present invention.
FIG. 2 is a flowchart for explaining operation of a reference flow rate setter of the flow rate measuring device according to the exemplary embodiment of the present invention.
FIG. 3A is a graph illustrating an example of flow rate characteristics of a specific gas appliance measured by using the flow rate measuring device according to the exemplary embodiment of the present invention.
FIG. 3B illustrates a number of times of measurement of a flow rate during use of a specific gas appliance and measured flow rates measured by using the flow rate measuring device according to the exemplary embodiment of the present invention.
FIG. 4 illustrates a difference value conversion table of the flow rate measuring device according to the exemplary embodiment of the present invention.
FIG. 5 illustrates flow rates obtained in the first to sixteenth measurements in FIG. 3B, difference values, and codes obtained based on the difference values.
FIG. 6 illustrates flow rates obtained in the twenty-first to sixtieth measurements in FIG. 3B, difference values, and codes obtained based on the difference values.

### DESCRIPTION OF EMBODIMENT

Hereinafter, an exemplary embodiment of a flow rate measuring device according to the present invention will be described with reference to the accompanying drawings. In the exemplary embodiment described below, a gas meter will be described as an example of the flow rate measuring device, and processing thereof will be described. In the drawings, identical constituent elements are given identical reference signs, and repeated description of constituent elements that have already been described will be omitted. The present invention is not limited to the exemplary embodiment described below.

### (Exemplary configuration of flow rate measuring device)

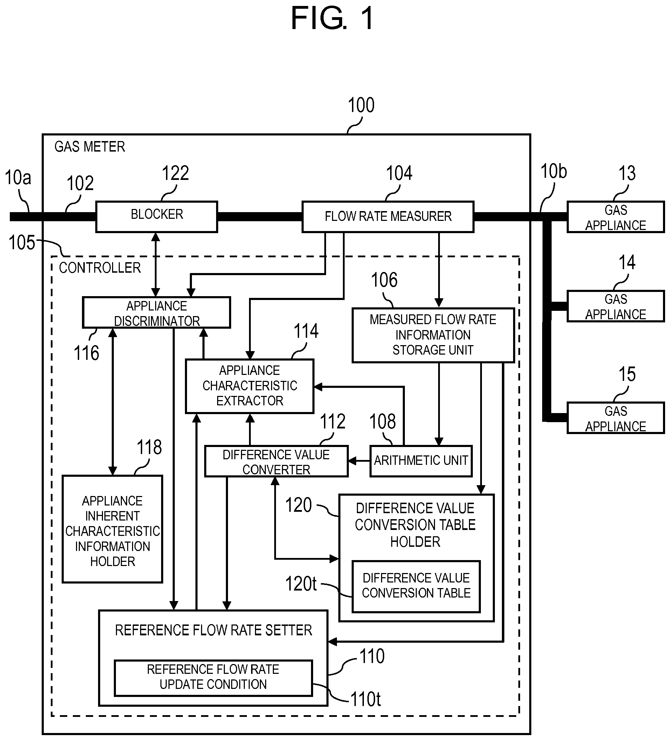

FIG. 1 illustrates a configuration example of gas meter 100 that is a flow rate measuring device according to the exemplary embodiment of the present invention. Gas meter 100 internally has flow path 102 and is used in a state of being connected to gas pipe 10a for supplying gas. Gas meter 100 is located between gas pipe 10a and one or more gas appliances (e.g., a gas stove, a gas fan heater, and a gas powered water heater). FIG. 1 illustrates a state where one end of flow path 102 of gas meter 100 is connected to gas pipe 10a on an upstream side and the other end of flow path 102 is connected to gas pipe 10b on a downstream side. In this example, gas appliances 13, 14, and 15 are connected to gas pipe 10b.

In the configuration illustrated in FIG. 1, gas meter 100, which is a flow rate measuring device, schematically has flow rate measurer 104 located in an intermediate portion of the flow path and controller 105. Flow rate measurer 104 measures a flow rate of gas flowing through flow path 102 at a prescribed time interval (hereinafter referred to as a "sampling interval" in some cases). The sampling interval is, for example, 0.5 seconds. For example, as flow rate measurer 104, an ultrasonic flowmeter can be applied. The ultrasonic flowmeter measures an instantaneous flow rate of gas by emitting ultrasonic waves to gas flowing in flow path 102 at a prescribed time interval and by calculating a propagation time difference caused by a gas flow. A fluctuation in a usage amount of gas can be detected by acquiring data indicating a flow rate detected at a prescribed time interval by flow rate measurer 104.

In the configuration illustrated in FIG. 1, controller 105 has measured flow rate information storage unit 106, arithmetic unit 108, difference value converter 112, appliance characteristic extractor 114, appliance inherent characteristic information holder 118, and appliance discriminator 116. Furthermore, controller 105 has reference flow rate setter 110 and difference value conversion table holder 120, and reference flow rate setter 110 holds reference flow rate update condition 110t that is a condition for update of a reference flow rate. A typical example of an operation of gas meter 100 will be described later.

In this example, gas meter 100 has blocker 122 located between gas pipe 10a and flow rate measurer 104. When an abnormal increase in flow rate of gas is detected, blocker 122 stops gas supply to gas appliances 13, 14, and 15 connected to gas pipe 10b under control of controller 105. For example, as blocker 122, a shutoff valve can be used.

Arithmetic unit 108 calculates a difference value for each sampling interval, based on flow rate values acquired by flow rate measurer 104. That is, when a flow rate value at a certain measurement timing is set to Q(n) and a flow rate value at a measurement timing which is immediately followed the certain measurement timing is set to Q(n - 1), arithmetic unit 108 calculates difference value D(n) = Q(n) - Q(n - 1) corresponding to the measurement timings.

Furthermore, controller 105 has difference value conversion table holder 120. Difference value conversion table holder 120 holds difference value conversion table 120t in which different codes are allocated to a plurality of classifications corresponding to difference values D(n) described above.

As will be described below, a code string obtained based on difference value D(n) may be further used in discriminating a gas appliance.

For example, difference value converter 112 can convert difference value D(n) at each measurement timing into a corresponding code with reference to difference value conversion table 120t. In this manner, a code string corresponding to a plurality of measurement timings is obtained. A method for discriminating an appliance by using a code string will be described later.

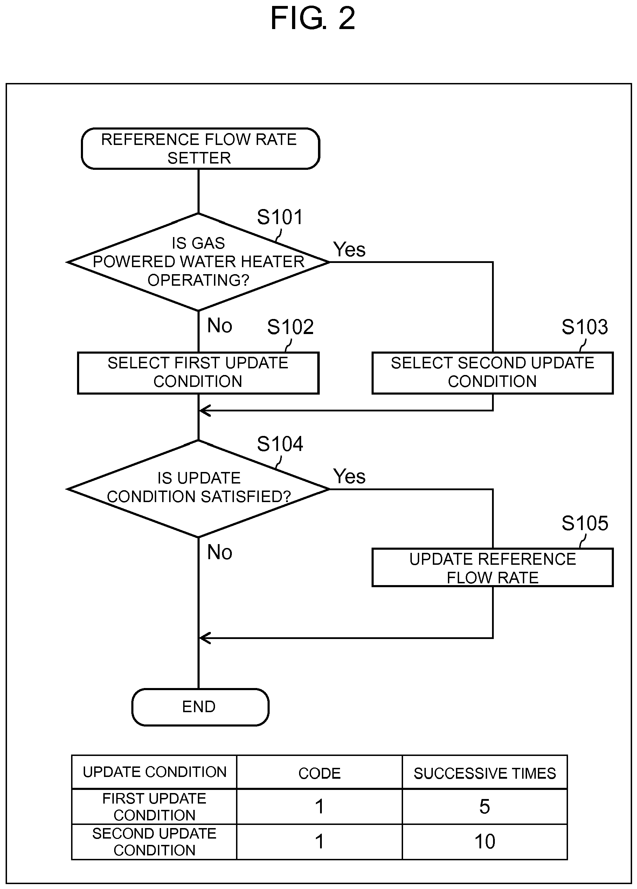

Next, a reference flow rate updating method in reference flow rate setter 110 is described by using the flowchart of FIG. 2.

Reference flow rate setter 110 first confirms a used appliance discriminated by appliance discriminator 116 and checks whether or not a specific gas appliance (gas powered water heater in the present exemplary embodiment) is currently operating (step S101), and when no gas powered water heater is not being used (No in step S101), a first update condition that is one of predetermined conditions held in reference flow rate update condition 110t is selected as an update condition (step S102).

When a gas powered water heater is being used (Yes in step S101), a second update condition that is one of the predetermined conditions held in reference flow rate update condition 110t is selected as an update condition (step S103). That is, one predetermined condition is changed to another predetermined condition.

Once it is determined that a gas powered water heater is being used, the second update condition is always selected, and when it is determined that use of a gas powered water heater has been stopped, the first update condition is selected as an update condition again. That is, one predetermined condition is changed to another predetermined condition.

Then, it is determined that the update condition is satisfied (step S104), and when the update condition is satisfied (Yes in step S104), the reference flow rate is updated by a predetermined method, for example, by using an average of flow rates obtained by flow rate measurer 104 during a period for determination. When the update condition is not satisfied (No in step S104), the updating process is not performed.

FIG. 2 illustrates a table showing two update conditions that is held in reference flow rate update condition 110t.

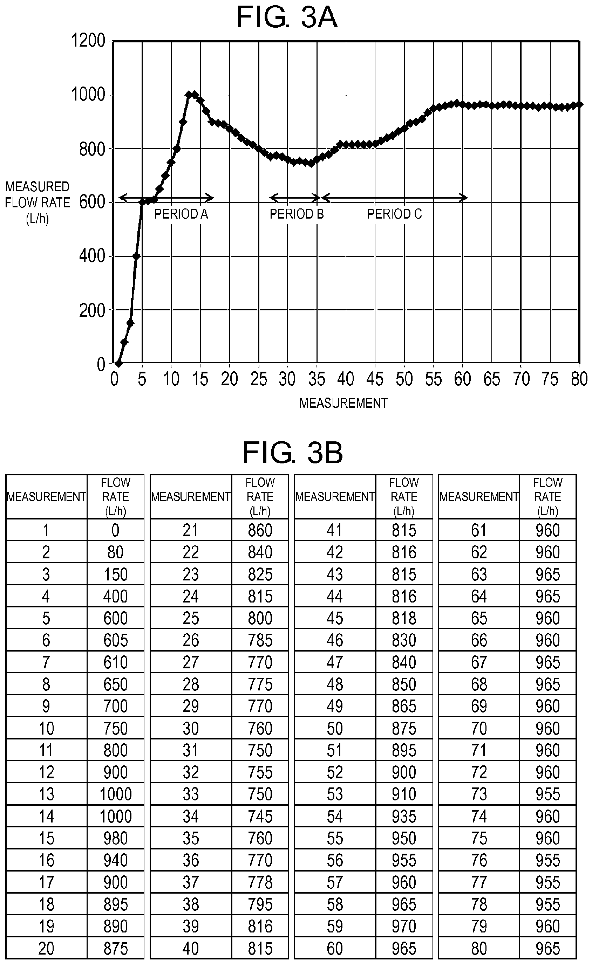

FIG. 3A is a graph showing an example of flow rate characteristics of a gas powered water heater that is a specific gas appliance targeted in the present invention, and FIG. 3B is a table showing a number of times of measurement of a flow rate measured every 0.5 seconds starting before start of use and measured flow rates.

As illustrated in FIG. 3A, this gas powered water heater exhibits a flow rate pattern in which a flow rate rapidly increases during period A as a result of start of combustion and then decreases. A gas meter that is a flow rate measuring device detects start of use of the gas powered water heater based on this flow rate pattern in which the flow rate rises as described above and a maximum flow rate. FIG. 3A shows that the flow rate temporarily stabilizes during period B and then increases again during period C.

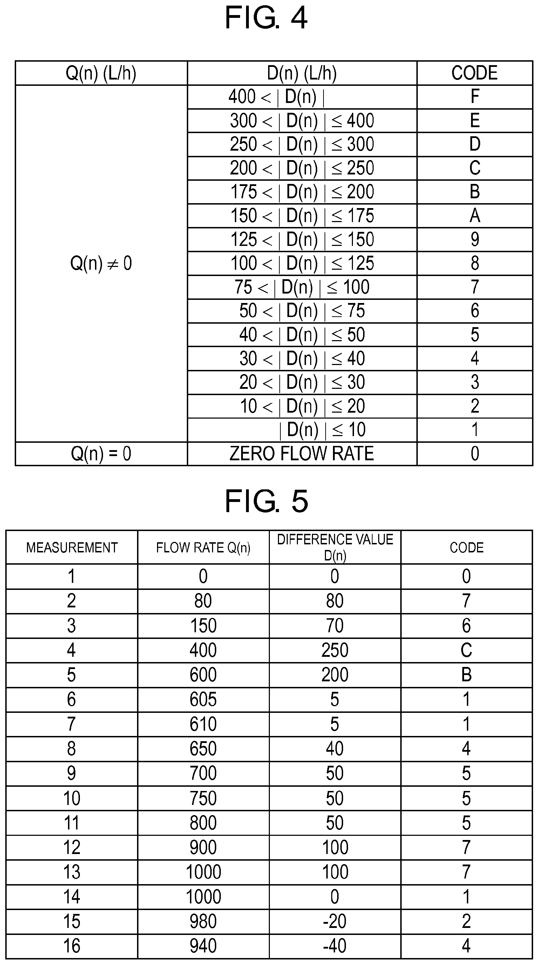

FIG. 4 illustrates an example of difference value conversion table 120t. Presence or absence of flow rate Q(n) is illustrated in FIG. 4, and codes 0 to F are allocated to respective ranges of difference value D(n).

FIG. 5 is a list of flow rate difference values found based on flow rates measured in the first to sixteen measurements of the gas appliance illustrated in FIG. 3B and codes obtained by converting the difference values by using the difference value conversion table of FIG. 4.

A code string [076CB11455577124] is obtained by the codes obtained in the first to sixteenth measurements (a code at measurement timing 0 is set to 0). It can be said that this code string simulates a pattern of a flow rate change during operation of the gas appliance which has started to be used.

The generated code string can be used in discriminating a gas appliance which starts to be used. Appliance characteristic extractor 114 may acquire the generated code string as one of the appliance characteristic quantities from difference value converter 112. If a code string is calculated in advance for each of gas appliances and is stored as the appliance inherent characteristic quantity in appliance inherent characteristic information holder 118, it is possible to compare a code string acquired from difference value converter 112 with the code strings held by appliance inherent characteristic information holder 118.

In this example, any one of the numbers 0 to 9 and alphabets A to F is allocated to each classification of a difference value. This allows a code string to be handled as a hexadecimal number. Compared to a case where a value of difference value D(n) is used in discriminating a gas appliance as it is, an advantageous effect can be obtained in that the memory is saved and calculating speed is improved.

Measured flow rate information storage unit 106 is used as a temporary memory in calculating difference value D(n) described above. Measured flow rate information storage unit 106 may be located inside controller 105 or outside controller 105.

Appliance discriminator 116 discriminates a gas appliance which starts to be used, by comparing an appliance characteristic quantity extracted by appliance characteristic extractor 114 and an appliance inherent characteristic quantity indicating a characteristic flow rate state of a specific gas appliance. The appliance inherent characteristic quantity is, for example, stored in appliance inherent characteristic information holder 118 as a code string obtained by converting a flow rate change pattern at start of use of an appliance by using the conversion table illustrated in FIG. 4.

Accordingly, appliance discriminator 116 compares a code string [09EFC157779B7267] obtained this time with the code string of the gas powered water heater held in appliance inherent characteristic information holder 118, and when these codes strings match each other, appliance discriminator 116 can determine that a gas appliance which starts to be used is a gas powered water heater.

Actually, it is possible to improve accuracy of discrimination of a gas appliance by performing the determining process by using not only a code string, but also a maximum flow rate set for each gas appliance, and the like.

Furthermore, appliance characteristic extractor 114 extracts an appliance characteristic quantity based on a reference flow rate set by reference flow rate setter 110. When use of a gas appliance starts in a state where no gas appliance is being used, a flow rate increases from zero, whereas when use of a gas appliance starts in a state where another gas appliance is already operating, a flow rate further increases from a state where a certain amount of gas is flowing. In appliance discrimination, it is requested to discriminate a gas appliance which starts to be used in such a state.

After an appliance is discriminated, it is therefore necessary to prepare for appliance discrimination by setting a reference flow rate again so that discrimination of a gas appliance which starts to be used next can be started.

In the conventional example described in PTL1, when a code of a difference value between flow rates measured every 0.5 seconds is 1 or less five successive times, a reference flow rate is updated.

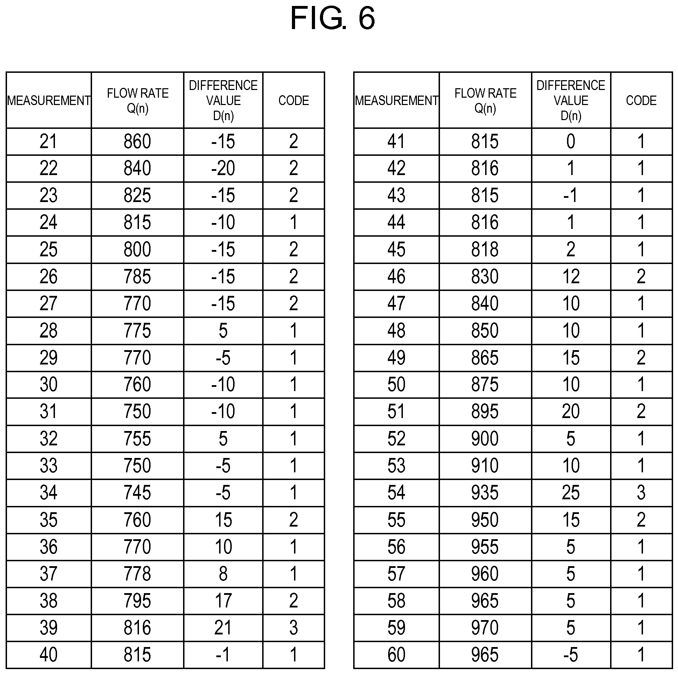

FIG. 6 is a list of flow rate difference values found based on flow rates measured in the twenty-first to sixtieth measurements after start of use of a gas powered water heater is detected by a gas meter and codes obtained by converting the difference values by using the difference value conversion table of FIG. 4.

As illustrated in FIG. 6, code 1 is obtained seven successive times from the twenty-eighth measurement to the thirty-fourth measurement. Accordingly, in this conventional discrimination method, next appliance discrimination is performed after resetting a reference flow rate to an average of flow rates Q(n) obtained in the twenty-eighth to thirty-fourth measurements.

Then, when appliance discrimination starts as a result of a rise in flow rate in the thirty-fifth measurement, a code string [211231111112112] is obtained from codes in the thirty-fifth to forty-ninth measurements. Since a code string held in appliance inherent characteristic information holder 118 is based on a zero flow rate, a code string [0211231111112112] is obtained when a reference flow rate is regarded as start of appliance discrimination, a flow rate at this time is set to 0 for convenience, and an initial code is set to 0.

It is determined that use of a gas fan heater has started since this code string matches a code string of a gas fan heater held in appliance inherent characteristic information holder 118.

Meanwhile, in the present exemplary embodiment, two reference flow rate update conditions are prepared as illustrated in FIG. 2. The first update condition is satisfied when a code obtained by difference value converter 112 is 1 five successive times, and the second update condition is satisfied when a code obtained by difference value converter 112 is 1 ten successive times.

Accordingly, in the gas meter that is a flow rate measuring device according to the present invention, after it is determined that use of a gas powered water heater that is a specific gas appliance has started, as illustrated in FIG. 2, a reference flow rate update condition is set to the second update condition, which is satisfied when a code obtained by difference value converter 112 is 1 ten successive times. As a result, the reference flow rate is not updated. Accordingly, appliance discrimination is not started, and period C of FIG. 3A can be handled as a change in flow rate of the gas powered water heater, and therefore it is not erroneously determined that use of a gas fan heater has started.

As described above, according to the present exemplary embodiment, when it is determined that a specific gas appliance such as a gas powered water heater is being used, a number of times of matching of a difference value code that is a reference flow rate update condition is changed. This makes it possible to prevent erroneous update of a reference flow rate, thereby preventing erroneous determination of a gas appliance.

In the present exemplary embodiment, an example in which a number of times of successive matching of a code obtained by converting a difference value between flow rates measured previous time and this time is changed has been described above. Alternatively, a difference value between flow rates may be used as it is. For example, a number of times of succession of a flow rate difference in a range from -10 L/h to 10 L/h may be changed.

As described above, in the present exemplary embodiment, a reference flow rate update condition is changed by changing a number of times of matching of a difference value code or a number of times of succession of a predetermined flow rate range, i.e., by changing a period required for determination while using the same condition for determination of a flow rate change.

Furthermore, in a case of a gas appliance of a relatively large gas flow rate such as a gas powered water heater, a fluctuating flow rate during a stable state is also relatively large, and therefore a flow rate range may be changed instead of a number of times of matching.

For example, a reference flow rate update condition in a case where a gas powered water heater is not operating may be a number of times of succession of a flow rate difference in a range from -10 L/h to 10 L/h, and a reference flow rate update condition in a case where a gas powered water heater is operating may be a number of times of succession of a flow rate difference in a range from -5 L/h to 5 L/h. In this case, in which the update condition is stricter than the normal update condition, a reference flow rate is harder to be updated, but an effect of preventing erroneous determination is obtained.

Furthermore, in a case where a gas appliance that generates a pulsating current such as a gas heat pump is used, a reference flow rate is not updated due to influence of the pulsating current, and a new gas appliance cannot be discriminated. In this case, however, the reference flow rate may be updated by widening a flow rate range. In this case, update of the reference flow rate caused by a gas appliance such as a gas powered water heater can be prevented by not only widening a flow rate range, but also prolonging a period for determination.

Furthermore, although an example in which two update conditions, i.e., the first update condition and the second update condition are prepared as reference flow rate update conditions has been described above, three or more update conditions may be prepared and various conditions may be set by combining a code or a flow rate range and a number of times of matching or a period for determination in accordance with whether or not a specific gas appliance is being used and a use state of a gas appliance such as a current gas flow rate.

As described above, a flow rate measuring device according to a first invention includes a flow rate measurer that measures a flow rate of gas; an appliance discriminator that discriminates a gas appliance that is being used based on a change in flow rate found by comparing the flow rate measured by the flow rate measurer and a reference flow rate; and a reference flow rate setter that updates the reference flow rate based on the flow rate measured by the flow rate measurer when the flow rate measured by the flow rate measurer satisfies a predetermined condition. Furthermore, the reference flow rate setter changes the predetermined condition when the appliance discriminator determines that the gas appliance is a specific gas appliance.

According to this configuration, by changing a reference flow rate update condition when use of a specific gas appliance such as a gas powered water heater is detected, it is possible to prevent erroneous update of a reference flow rate and thus prevent erroneous determination of a gas appliance.

Especially in the first invention, the flow rate measuring device according to a second invention may be arranged such that the predetermined condition is a changed flow rate range for determination and a period for determination by which it is determined that the flow rate measured by the flow rate measurer is stable; and the reference flow rate setter changes the period for determination when the appliance discriminator determines that the gas appliance is a specific gas appliance.

Especially in the second invention, the flow rate measuring device according to a third invention may be arranged such that the reference flow rate setter prolongs the period for determination when the appliance discriminator determines that the gas appliance is a specific gas appliance.

Especially in the first invention, the flow rate measuring device according to a fourth invention may be arranged such that the predetermined condition is a changed flow rate range for determination and a period for determination by which it is determined that the flow rate measured by the flow rate measurer is stable; and the reference flow rate setter changes the changed flow rate range when the appliance discriminator determines that the gas appliance is a specific gas appliance.

Especially in any one of the first through fourth inventions, the flow rate measuring device according to a fifth invention may be arranged such that when the appliance discriminator determines that use of a specific gas appliance has stopped after the predetermined condition is changed, the predetermined condition used before the change is used again.

### INDUSTRIAL APPLICABILITY

According to the exemplary embodiment of the present invention, it is possible to discriminate an appliance with certainty by preventing erroneous appliance discrimination even when a plurality of gas appliances are used. Therefore, the present invention is useful for a gas meter having a function to discriminate a gas appliance.

### REFERENCE MARKS IN THE DRAWINGS

13 to 15: gas appliance
100: gas meter (flow rate measuring device)
104: flow rate measurer
110: reference flow rate setter
110t: reference flow rate update condition
116: appliance discriminator

## Claims

1. A flow rate measuring device comprising:
a flow rate measurer that measures a flow rate of gas;
an appliance discriminator that discriminates a gas appliance that is being used based on a change in flow rate found by comparing the flow rate measured by the flow rate measurer and a reference flow rate; and
a reference flow rate setter that updates the reference flow rate based on the flow rate measured by the flow rate measurer when the flow rate measured by the flow rate measurer satisfies a predetermined condition,
wherein the reference flow rate setter changes the predetermined condition when the appliance discriminator determines that the gas appliance is a specific gas appliance.

2. The flow rate measuring device according to claim 1, wherein
the predetermined condition is a changed flow rate range for determination and a period for determination by which the reference flow rate setter determines that the flow rate measured by the flow rate measurer is stable, and
the reference flow rate setter changes the period for determination when the appliance discriminator determines that the gas appliance is a specific gas appliance.

3. The flow rate measuring device according to Claim 2, wherein
the reference flow rate setter prolongs the period for determination when the appliance discriminator determines that the gas appliance is a specific gas appliance.

4. The flow rate measuring device according to claim 1, wherein
the predetermined condition is a changed flow rate range for determination and a period for determination by which the reference flow rate setter determines that the flow rate measured by the flow rate measurer is stable, and
the reference flow rate setter changes the changed flow rate range when the appliance discriminator determines that the gas appliance is a specific gas appliance.

5. The flow rate measuring device according to any one of claims 1 through 4, wherein when the appliance discriminator determines that use of the specific gas appliance has stopped after the predetermined condition is changed, the predetermined condition used before the change is used again.
